# EUROPEAN PATENT SPECIFICATION

(11) **EP 0 800 782 B1**
(45) Date of publication and mention of the grant of the patent: **01.09.1999**
(21) Application number: 96302533.3
(22) Date of filing: 11.04.1996
(51) Int. Cl.: A47J 47/00, A47G 19/03

(54) **Assembly for treating food**
Vorrichtung zur Behandlung von Nahrungsmitteln
Dispositif pour le traitement des aliments

(43) Date of publication of application: 15.10.1997
(73) Proprietor: Tseng, Cheng-Tzu, Wu-Chi Town, Taichung Hsien (TW)
(72) Inventor: Tseng, Cheng-Tzu, Wu-Chi Town, Taichung Hsien (TW)
(74) Representative: Hulse, Thomas Arnold

(56) References cited:
- FR-A- 1 432 908
- FR-A- 2 646 766
- GB-A- 334 671
- US-A- 1 574 259
- US-A- 4 828 134
- PATENT ABSTRACTS OF JAPAN vol. 017, no. 376 (C-1084), 15 July 1993 & JP-A-05 064617 (HASEGAWA KAGAKU KOGYO KK), 19 March 1993,

## Description

The present invention is directed to an assembly for treating food, and especially to one wherein a plurality of disc-like plates are used with a bottom disc, so that a variety of food can be treated respectively on a plurality of plates by chopping, pounding, cutting, stirring etc. under sanitary conditions. This structure of disc-like plates can also prevent water and food being treated from dropping off its respective plates, yet frozen food can be defrosted by use of the bottom disc.

Normally, frozen food requires defrosting and pounding, cutting, splitting or chopping etc. after it is taken out from a freezer and before being heated in a pot. Many families may treat food by pounding, cutting, splitting or chopping etc. on a plain plate such as a chopping board, and if the food requires defrosting and placing in another vessel after treating, these are not only bothersome operations but food is also liable to dropping off the respective plates. If there is water in the food, water may flow around, thus creating humid atmosphere as well as dirty conditions in a kitchen cabinet and inconvenience for a user.

Moreover, when treating food, raw and cooked food, meat and vegetables, and food for human and for animal consumption, it will be insanitary if only one or two plates are used to treat the food; in other words, this not only makes for inconvenience in treating of food, but also is insanitary or harmful to the human body.

Further, in defrosting of frozen food, if the food is merely stood in a corner of the kitchen, such as on a work top or a chopping board, efficiency of defrosting is inferior in addition to the insanitation it induces.

The main object of the present invention is to provide a bottom disc having a defrosting capability and a plurality of interchangeable disc-like plates which are used for pounding, cutting, splitting or chopping etc., and even can be used as temporary vessels for food. Various foods can thus be treated respectively on these disc-like plates for maintaining sanitation. The structure can also prevent water and the food being treated from dropping off the respective plates so as to render areas of the kitchen wet and unclean.

Besides, the plates of the present invention are characterized by being thin and cheap, so that a user can discard a plate and take a new plate if it is damaged by a knife or is full of carving scars so as to be liable to bacteria breeding, sanitation can thus be maintained.

According to the present invention, an assembly for treating food comprises a bottom disc having a planar surface, and a plurality of interchangeable disc-like plates, characterized in that a plurality of annular and radiant grooves are provided in the said planar surface of the bottom disc, a recess, which is conformed in shape for receiving the bottom disc, is provided on the underside of each plate, and each plate has a surface extending outwardly from said recess. A water collecting groove may be formed by the extension of each plate from the recess, and an encircling inclining surface preferably extends upwardly from the outer periphery of the water collecting groove.

Preferred embodiments of the invention will now be described, by way of example only, with reference to the accompanying drawings, wherein:
Figure 1 is a sectional view showing the bottom disc and the piled up disc-like plates of one assembly in accordance with the present invention;
Figure 2 is a sectional view of the bottom disc of the assembly with a single disc-like plate (having food therein) placed thereon;
Figure 3 is a sectional view of components of the assembly in defrosting mode;
Figure 4 is a top view of the bottom disc of the assembly; and
Figure 5 is a sectional view showing the bottom disc and the piled-up disc-like plates of another preferred embodiment of the present invention.

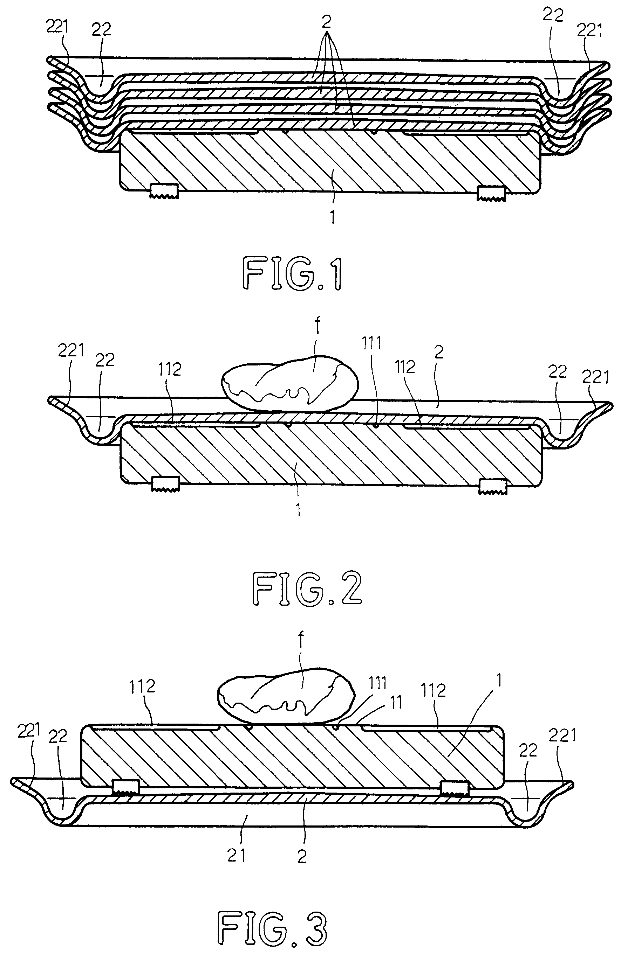

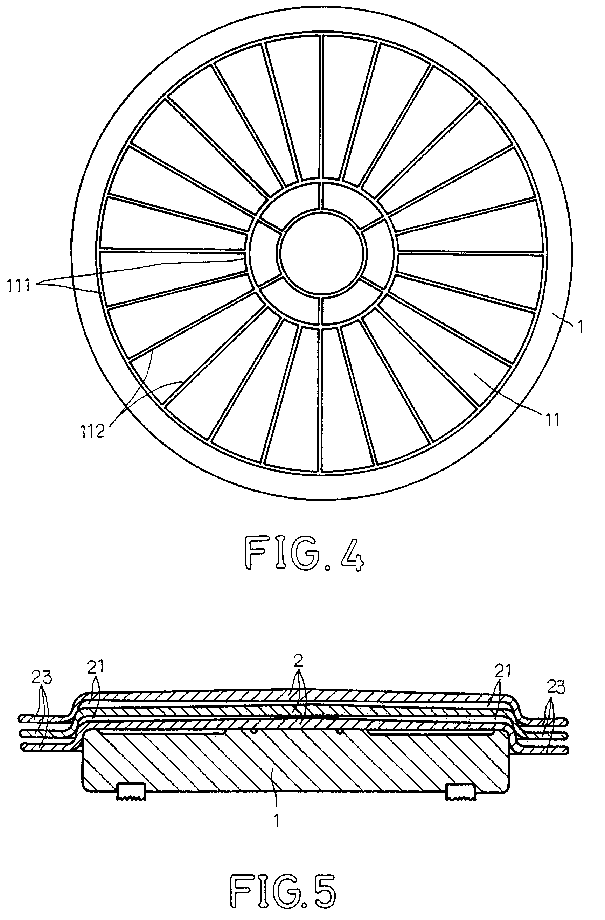

Referring to Figures 1 to 4, wherein a bottom disc 1 and at least one plate 2 are utilised, i.e., the assembly of the invention is composed of a bottom disc 1 and a plurality of plates 2.

The bottom disc 1 can be used for placing thereon the plate or plates 2 to be a firm seat for the plate or plates 2. A planar surface 11 is formed on the top of the bottom disc 1, and a plurality of annular grooves 111 and radiant grooves 112 with heat sinking function are provided in the top surface 11 of the bottom disc 1, thereby, the top surface 11 can be in contact with air over a large area, and the bottom disc 1 can have good heat sinking ability to defrost food.

The plates 2 are each principally provided with a recess 21 which is conformed in shape for receiving the bottom disc 1, same on the underside of the plate 2, a water collecting groove 22 is formed by extension of the plate 2 from the recess 21, and an encircling inclining surface 221 extends upwardly and outwardly from the outer periphery of the water collecting groove 22.

As is shown in Figure 1, the plates 2 of the present invention can be conveniently piled one-by-one on the bottom disc 1 for storage. And as is shown in Figure 3, when it is desired to defrost, frozen food f is put on the bottom disc 1, enlarged area having heat sinking function on the annular and radiant grooves 111, 112 can defrost the food very fast. If the water content of the food is high, the bottom disc 1 can be put on one of the plates 2, so that water coming from defrosting can be collected in the water collecting groove 22 of the plates 2, and can presently be dealt with by being tipped out rather than make a wet and dirty environment.

Referring to Figure 2, components of the assembly can be utilised with the bottom disc 1 accompanied with a succession of plates 2 for dealing with work such as pounding, cutting, splitting or chopping etc., whereby raw and cooked food, meat and vegetables and food for human and for animal consumption can be treated on different plates, so that sanitation can be maintained.

The inclining surface 221 of each plate 2 afford the plate 2 with a dish-like shape, whereby a lot of food can be dealt with thereon without dropping off the plates 2 to become dirty. Hence, the plates 2 of the present invention can be used further like trays, after treating or cutting, the plates 2 and the food being brought as a whole to where a pot is disposed, the food then being conveniently moved into the pot without fear of dropping of the food.

In use, the plates 2 can direct water to be collected in the water collecting groove 22 because each plate 2 is declined gradually downwardly from the centre thereof toward the periphery adjacent the groove thereof.

Referring to Figure 5 showing another embodiment of the present invention, wherein each plate 2 has a plain annular surface 23 extending from the recess 21 to the periphery, so as to be convenient for holding food with larger volume or lesser water content can be treated thereon by cutting, splitting or pounding etc.

## Claims

1. An assembly for treating food, comprising a bottom disc (1) having a planar surface (11), and a plurality of interchangeable, disc-like plates (2), characterized in that:-
a plurality of grooves (111, 112) are provided in said planar surface (11) of the bottom disc (1),
a recess (21), which is conformed in shape for receiving the bottom disc (1), is provided on the underside of each plate (2), and
each plate (2) has a surface (22 or 23) extending outwardly from said recess.

2. An assembly for treating food as in Claim 1, characterized in that:
a water collecting groove (22) is formed by the extension of each plate (2) from said recess (21), and an encircling inclining surface (221) extends upwardly and outwardly from the outer periphery of said water collecting groove (22).

3. An assembly for treating food as in Claim 1 or Claim 2, characterized by annular grooves (111) in the bottom disc (1).

4. An assembly for treating food as stated in any one of Claims 1 to 3, characterized by radiant grooves (112) in the bottom disc (1).

5. An assembly for treating food as in any one of Claims 1 to 4, comprising a bottom disc (1) and a plurality of plates (2) piled one-by-one on the bottom disc.

## Patentansprüche

1. Anordnung zur Behandlung Von Nahrungsmitteln, mit einer Bodenplatte (1) mit einer ebenen Oberfläche (11) und mit einer Mehrzahl von austauschbaren plattenähnlichen Tellern (2), dadurch gekennzeichnet, daß
eine Mehrzahl von Rillen (111, 112) in der ebenen Oberfläche (11) der Bodenplatte (1) vorgesehen ist,
eine Vertiefung (21), deren Form zur Aufnahme der Bodenplatte (1) angepaßt ist, an der Unterseite jedes Tellers (2) vorgesehen ist, und
jeder Teller (2) eine Oberfläche (22 oder 23) aufweist, die sich von der Vertiefung nach außen erstreckt.

2. Anordnung zur Behandlung von Nahrungsmitteln nach Anspruch 1, dadurch gekennzeichnet, daß
eine Wassersammelrinne (22) durch den Fortsatz jedes Tellers (2) von der Vertiefung (21) gebildet ist, und eine umgebende, schräge Oberfläche (221) sich von dem äußeren Umfang der Wassersammelrinne (22) nach oben und nach außen erstreckt.

3. Anordnung zur Behandlung von Nahrungsmitteln nach Anspruch 1 oder Anspruch 2, gekennzeichnet durch ringförmige Rillen (111) in der Bodenplatte (1).

4. Anordnung zur Behandlung von Nahrungsmitteln nach einem der Ansprüche 1 bis 3, gekennzeichnet durch strahlenförmige Rillen (112) in der Bodenplatte (1).

5. Anordnung zur Behandlung von Nahrungsmitteln nach einem der Ansprüche 1 bis 4, umfassend eine Bodenplatte (1) und eine Mehrzahl von Tellern (2), die einer nach dem anderen auf der Bodenplatte gestapelt sind.

## Revendications

1. Dispositif pour traiter des aliments, comprenant un disque inférieur (1) ayant une surface plane (11), et une pluralité de plaques interchangeables (2) de type disque, caractérisé en ce que
une pluralité de gorges (111, 112) sont prévues dans ladite surface plane (11) du disque inférieur (1),
un renfoncement (21), qui est conformé avec une forme appropriée pou recevoir le disque inférieur (1), est prévu sur le dessous de chaque plaque (2), et
chaque plaque (2) a une surface (22 ou 23) s'étendant vers l'extérieur depuis ledit renfoncement.

2. Dispositif pour traiter des aliments selon la revendication 1, caractérisé en ce que
une gorge de collecte d'eau (22) est formée par l'extension de chaque plaque (2) depuis ledit renfoncement (21), et une surface inclinée d'encerclement (221) s'étend vers le haut et vers l'extérieur depuis la périphérie extérieure de ladite gorge de collecte d'eau (22).

3. Dispositif pour traiter des aliments selon la revendication 1 ou 2, caractérisé par des gorges annulaires (111) dans le disque inférieur (1).

4. Dispositif pour traiter des aliments selon l'une quelconque des revendications 1 à 3, caractérisé par des gorges radiales (112) dans le disque inférieur (1).

5. Dispositif pour traiter des aliments selon l'une quelconque des revendications 1 à 4, comprenant un disque inférieur (1) et une pluralité de plaques (2) empilées une à une sur le disque inférieur.
